(19) Europäisches Patentamt
European Patent Office
Office européen des brevets

(11) **EP 4 344 863 A1**

(12) **EUROPEAN PATENT APPLICATION**

(43) Date of publication:
**03.04.2024 Bulletin 2024/14**

(21) Application number: **22306456.9**

(22) Date of filing: **30.09.2022**

(51) International Patent Classification (IPC):
**B29D 11/00** (2006.01)    **B29C 64/112** (2017.01)

(52) Cooperative Patent Classification (CPC):
**B29D 11/00317; B29C 64/112; B29D 11/00432;
B29D 11/00865; B33Y 80/00;** B29L 2011/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Essilor International
94220 Charenton-Le-Pont (FR)**

(72) Inventors:
• **BARANTON, Konogan
94220 Charenton-Le-Pont (FR)**
• **BEN CHEIKH, Ilhem Lahmar
94220 Charenton-Le-Pont (FR)**

(74) Representative: **Plasseraud IP
66, rue de la Chaussée d'Antin
75440 Paris Cedex 09 (FR)**

(54) **MANUFACTURING METHOD OF AN OPTICAL ARTICLE INCORPORATING OPTICAL ELEMENTS BY INKJET PRINTING**

(57)    It is disclosed a method of manufacturing an optical article comprising:
- Providing a base lens substrate having first and second opposite optical surfaces,
- forming at least one optical element protruding from the second surface of the base lens substrate, and
- forming at least one second layer extending over the second surface of the base lens substrate and encapsulating the at least one optical element,
wherein the optical element and the second layer are formed in materials having different refraction indexes, and the forming of the optical element is performed by inkjet printing.

It is also disclosed an optical article obtained by application of this method.

FIG. 5a

EP 4 344 863 A1

**Description**

TECHNICAL FIELD

The present disclosure relates to a method of manufacturing an optical article including at least one optical element such as a microlens, and to an optical article obtained by application of said method.

STATE OF THE ART

Optical articles such as lenses generally comprise a base-lens substrate which is configured to provide a desired optical function, such as a desired optical power.

It has recently been proposed to add on such base-lens substrate one or a plurality of protruding optical elements, such as microlenses. Microlenses can notably be used to slow down myopia progression, by providing an optical blurred image in front of the retina, triggering a stop signal to the eyes growth.

Accordingly, various optical lenses are provided that comprise a central area that is free of microlenses, to enable a good vision, and that comprise a plurality of microlenses in the peripheral visual field to slow down myopia progression.

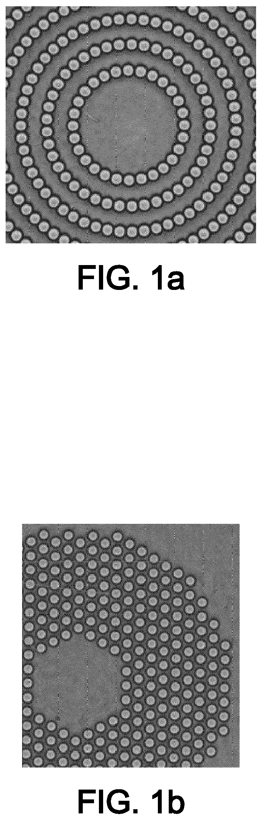

Various patterns of microlenses in the peripheral visual field have been proposed. With reference to figure 1a, a first pattern comprises a plurality of concentric circles formed by regularly distributed microlenses. This pattern creates a signal of non-focused light. With reference to figure 1b, another pattern is displayed which comprises an array of microlenses regularly distributed within a ring corresponding to the peripheral field of view of the lens. This pattern creates a signal of defocus in front of the retina.

In these two types of optical lenses, the microlenses can be molded or directly tooled with specifically accurate turning machines. However, this process does not permit personalizing the design of the microlens pattern. Moreover, the microlenses are located on the surface of the base-lens substrate, thereby being sensitive to scratches and other damage, and also being prone to difficulties of cleaning.

Alternatively, it has been proposed to replace microlenses by dots of diffusion in the peripheral field of view, which may also significantly slow down myopia progression, the dots of diffusion being formed by spots obtained by laser tooling. Here again, these spots are on the surface and are exposed to dust and dirtiness.

Attempts have also been made to embed microlenses within an optical article, for instance by molding a first lens having microlens protruding from a surface therone, and there overmolding the first lens by a second lens. In this manner, the microlenses are embedded within the optical article, at the interface of the two materials, and external surfaces of the optical article are smooth and slick. However this process and the obtained articles are sensitive to delamination.

SUMMARY OF THE INVENTION

The purpose of the present disclosure is to provide a solution to the defects of the prior art.

In particular, one aim of the present disclosure is to provide a method for manufacturing an optical article comprising optical elements such as microlenses, wherein the optical article is less sensitive to damage and the manufacturing method can be personalized.

Accordingly, a method of manufacturing an optical article is disclosed, comprising:

- providing a base lens substrate having first and second opposite optical surfaces,
- forming at least one optical element protruding from the second surface of the base lens substrate, and
- forming at least one second layer extending over the second surface of the base lens substrate and encapsulating the at least one optical element,

wherein the optical element and the second layer are formed in materials having different refraction indexes, and the forming of the optical element is performed by inkjet printing.

In embodiments, forming the optical element by inkjet printing comprises depositing at least one droplet of material for forming the optical element.

In embodiments, depositing at least one droplet of material comprises depositing a single droplet of material, said single droplet forming the optical element.

In embodiments, depositing at least one droplet of material comprises depositing a plurality of coalescing droplets, to form the optical element.

In embodiments, the method further comprises a preliminary step of performing, on the second optical surface, a surface preparation configured to set a desired curved surface for each deposited droplet of material.

In embodiments, forming the optical element by inkjet printing comprises depositing successive layers of material forming the optical element on the second optical surface of the base lens substrate.

In embodiments, the method comprises depositing the successive layers of material forming the optical element according to a stepped profile.

In embodiments, depositing the successive layers of material forming the optical element comprise depositing a layer of material forming the optical element on top of a previously deposited layer, in such a way that the previously deposited layer is enclosed by the next deposited layer.

In embodiments, forming the optical element by inkjet printing comprises depositing successive layers of material on the second optical surface of the base lens substrate, wherein each layer of material comprises a first material on first regions for forming the optical elements, and a second material on second regions surrounding the first regions for forming the second layer surrounding the optical elements.

In embodiments, the optical element has a target curved profile configured to achieve a determined optical function, the inkjet printing is performed using a printing device having a determined resolution according to an axis which is, during printing, perpendicular to the deposition surface, and the materials forming the optical element and the second layer are selected such that the difference between the target curved profile and the printed profile formed by the successive layers of material causes an error on the optical function lower than a predetermined threshold.

In embodiments, the optical element is a microlens having a target curved profile configured to achieve a determined optical power, and the materials forming the optical element and the second layer are selected such that the difference between the target curved profile and the printed profile causes a deviation of optical path of a determined wavelength lower than a predetermined threshold.

In embodiments, the predetermined threshold is lower or equal to $\lambda/4$ where $\lambda$ is the determined wavelength.

In embodiments, the materials forming the optical element and the second layer are selected such that $z(n1-n2)$ is lower than the predetermined threshold, where z is the resolution of the inkjet printing device according to the axis which, in operation, is perpendicular to the second surface, n1 is the refraction index of the material forming the optical element and n2 is the refraction index of the material forming the second layer.

In embodiments, printing the at least one optical element comprises transmitting, to the printing device, a digital file comprising instructions defining printing parameters, and the method further comprises, when the error on the optical function between the printed profile and the target profile exceeds the predetermined threshold, updating the digital file by correcting the printing parameters of the digital file, and sending the updated file to the printing device.

In embodiments, the material for forming the optical element is the material for forming the second layer to which are added nanoparticles.

It is also disclosed an optical article, characterized in that it is obtained by implementing the manufacturing method according to the above description.

The claimed method proposes forming optical elements embedded within an optical article by inkjet printing. As the optical elements are embedded within the optical article, they are not sensitive to damage and scratches and may not be exposed to dust. Furthermore, inkjet printing enables printing a specific and personalized pattern of optical elements, where the disposition of the optical elements and the size of the optical elements may be adjusted to the needs of the wearer.

In embodiments, a coarse printing resolution along the optical axis may be circumvented by selecting materials forming the optical elements and the layer encapsulating the optical elements having desired refraction indexes, and adapting the printing pattern according to the refraction indexes of the materials.

DESCRIPTION OF THE DRAWINGS

For a more complete understanding of the description provided herein and the advantages thereof, reference is now made to the brief descriptions below, taken in connection with the accompanying drawings and detailed description, wherein like reference represent like parts.

- Figures 1a and 1b, represent examples of optical articles comprising, on a surface thereof, a pattern of microlenses for slowing down myopia evolution.
- Figure 2a schematically represents the main steps of a manufacturing method according to an embodiment.
- Figure 2b schematically represents the main steps of a manufacturing method according to another embodiment.
- Figure 3 schematically represents an example of an optical article obtained by application of the manufacturing method.
- Figure 4 is a schematic representation of an embedded microlens.
- Figures 5a and 5b respectively represent a complete target surface of a microlens and its approximation by a stair function, and a detailed portion thereof.
- Figures 6a and 6b respectively represent the deviation of optical path of a determined wavelength of light between the target surface and the stair function, for the complete target surface of figure 5a and the detailed portion of figure 5b.
- Figure 7 schematically represents an example of successive layers of materials deposited by inkjet printing to form an optical article according to an embodiment.

DETAILED DESCRIPTION OF AN EMBODIMENT

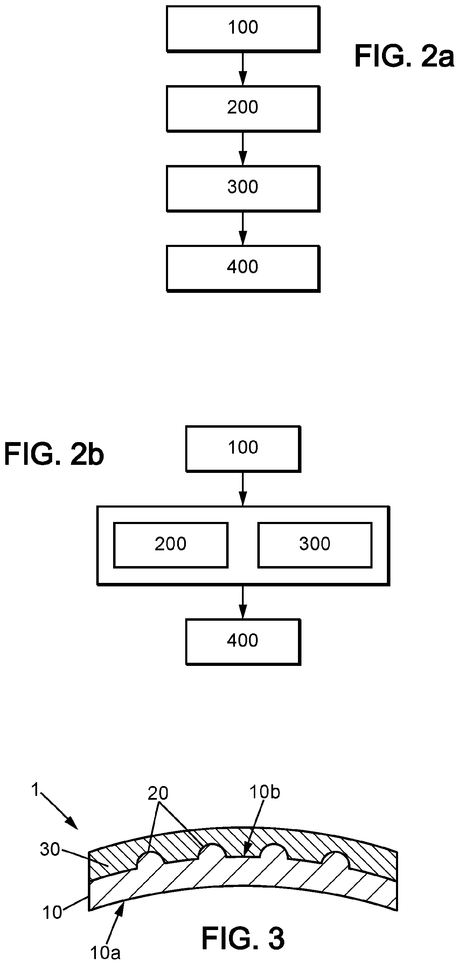

With reference to figures 2a and 2b, the main steps of a method for manufacturing an optical article 1 according to embodiments of the present disclosure will now be described. An example of optical article 1 obtained by the method is represented schematically in figure 3.

The method comprises a step 100 of providing a base lens substrate 10 having first and second opposite optical surfaces 10a, 10b.

The first optical surface 10a may be a back surface of the base lens substrate 10 located proximal to the eye of the user when the optical article is integrated in a pair of glasses, and the second optical surface 10b may be a front surface located distally from the eye of the user when the optical article is integrated in a pair of glasses. Alternatively, the second optical surface 10b may be the surface located proximal to the eye and the first optical surface 10a may be the front surface of the base lens substrate 10, located distally from the eye of the user.

The base lens substrate 10 may comprise a single layer or may be formed of a laminate. The base lens substrate can comprise a piano wafer, i.e. a layer of material devoid of optical power, a base lens providing optical power, or both, i.e. a base lens providing optical power and a wafer complementing the base lens with an optical function other than optical power, such as one or more among the following:

- Amplitude filtering,
- Spectral filtering (such as edgepass like shortpass or longpass, or bandpass filtering, filtering of specific colors, for instance by tinting, incorporating photochromic or electrochromic functions, UV absorption, mirror, etc.),
- Polarization.

A piano wafer may be formed by one or several ophthalmic-grade function film (with for example polar or photochromic properties), optionally having an ophthalmic-grade protective film on one or both sides of the ophthalmic grade functional film.

Suitable transparent resin film or sheet materials for forming a piano wafer (including functional and protective films) include poly(vinyl alcohol) (PVA) or cellulose acylate-based materials, for example, cellulose diacetate and cellulose triacetate (TAC). Other usable wafer materials can include polycarbonate, polysulfone, cellulose acetate buturate (CAB) or cyclic oleofin copolymer (COC), polyacrylate, polyester, polystyrene, copolymers of acrylate and styrene, and poly(vinylalcohol) (PVA). Polycarbonate-based materials include, for example, polybisphenol-A carbonate; homopolycarbonate such as 1,1' dihroxydiphenyl-phenylmethylmethane, 1,1'-dihroxydiphenyl-diphenylmethane, 1,1 '-dihydroxy-3,3'-dimethyl diphenyl-2,2-propane, their mutual copolymer polycarbonate and copolymer polycarbonate with bisphenol-A.

A base lens may be formed in organic eyeglass, for example made of thermoplastic or thermosetting plastic. In particular, thermoplastic materials may be selected from, for instance: polyamides, polyimide, polysulfones, polycarbonates and copolymers thereof, poly(ethylene terephtalate) and polymethylmethacrylate (PMMA).

Thermosetting materials may be selected from, for instance: cycloolefin copolymers such as ethylene/norbornene or ethylene/cyclopentadiene copolymers ; homo- and copolymers of allyl carbonates of linear or branched aliphatic or aromatic polyols, such as homopolymers of diethylene glycol bis(allyl carbonate) (CR 39®) ; homo- and copolymers of (meth)acrylic acid and esters thereof, which may be derived from bisphenol A ; polymer and copolymer of thio(meth)acrylic acid and esters thereof, polymer and copolymer of allyl esters which may be derived from Bisphenol A or phtalic acids and allyl aromatics such as styrene, polymer and copolymer of urethane and thiourethane, polymer and copolymer of epoxy, and polymer and copolymer of sulphide, disulfide and episulfide, and combinations thereof. As used herein, a (co)polymer is intended to mean a copolymer or a polymer. As used herein, a (meth)acrylate is intended to mean an acrylate or a methacrylate.

Examples of substrates to be suitably used in the present invention include those obtained from MR6®, MR7®, MR8®, MR174 ® and MR10® resins (thermosetting polythiourethane resins). The various substrates based on polythiourethane resins are marketed by the Mitsui Toatsu Chemicals company and these substrates as well as the monomers used for their preparation are especially described in the patents U.S. Pat. No. 4,689,387, U.S. Pat. No. 4,775,733, U.S. Pat. No. 5,059,673, U.S. Pat. No. 5,087,758 and U.S. Pat. No. 5,191,055.

The base lens is preferably shaped to provide optical power suitable for correcting a wearer ametropia, for instance myopia or hyperopia. The base lens 12 may be monofocal or multifocal such as a multifocal progressive lens.

The base lens substrate 10 may comprise other layers in addition to the base lens and/or plano wafer, such as for instance photochromic trans-bonding® layer on a front surface of a base lens, or any additional layer which can be deposited on the base lens or plano wafer and which incorporates an optical function such that:

- Amplitude filtering function,
- Spectral filtering function (such as edgepass like shortpass or longpass, or bandpass filtering, or filtering of specific colors, for instance by tinting, or incorporating photochromic or electrochromic functions, UV absorption, mirror, etc.),
- Polarization function.

The base-lens may also be a semi-finished lens which means that it does not provide the final power, also called target power, of the lens that is to be manufactured from the semi-finished lens. It may provide a power which is not the target power, said target power being obtained by later surfacing of the semi-finished lens.

The base-lens may also be a lens which is not trimmed, which means that its peripheral shape has not been adjusted to the shape of a frame in which it will then be inserted.

Providing the base lens substrate 10 may be performed according to any technique known to the skilled person, for instance by casting or inkjet printing a base-lens, and, as the case may be, adding to the base-lens any additional layer by overmolding, inkjet printing, coating, etc.

The method further comprises forming 200 at least one, and preferably a plurality or optical elements 20 protruding from the second optical surface 10b of the base-lens substrate 10. This step is performed by inkjet printing and is described in more details below. The optical elements protruding from the second optical surface 10b exhibit a height variation with reference to the surface they are protruding from, on a restricted width. By protruding, is meant that each element projects from the second optical surface 10b outwardly, i.e. away from said surface.

The optical elements may provide optical wavefront modification on its intensity, curvature or light deviation. For instance, when optical elements provide a modification of the intensity of the optical wavefront, they may locally absorb wavefront intensity within the range of 0 to 100%.

When the optical elements provide a modification of the curvature of the wavefront, they can locally modify the wavefront curvature within a range of $\pm$ 20 Diopters.

When the optical elements provide light deviation, they can be adapted to locally scatter an amount of light, for instance comprised between 1 and 20%, within a range from $\pm 1$ ° to $\pm 30°$.

By "locally" is meant at the intersection between the wavefront and the optical elements.

In embodiments, the at least one, for example all of the optical elements are microlenses. A microlens is a discrete optical element of microscopic or millimetric scale, inducing a local change in optical power of the optical device.

A microlens may be spherical, toric, or have an aspherical shape. A microlens may have a single focus point, or cylindrical power, or non-focusing point. In preferred embodiments, microlenses can be used to prevent progression of myopia or hyperopia. In that case, the base lens substrate comprises a base lens providing an optical power for correcting myopia or hyperopia, and the microlenses may provide respectively an optical power greater than the optical power of the base lens if the wearer has myopia, or an optical power lower than the optical power of the base lens if the wearer has hyperopia.

In the sense of the present disclosure, a "microlens" has a contour shape being inscribable in a circle having a diameter greater than or equal to 0.5 mm and smaller than or equal to 10.0 mm.

The microlenses may be distributed according to a regular or non-regular pattern, provided the pattern comprises a sufficient area free of microlenses to permit clear vision for the wearer. For example, the microlenses may be regularly distributed along at least one circle, and possibly a plurality of concentric circles, centered on the optical center of the refraction area. According to another example, the microlenses may be regularly distributed among an annular section centered on the optical center of the refraction area.

The mean cylinder of the different micro lenses may be adjusted based on the shape of the retina of the person.

The refraction area may comprise a far vision reference point, a near vision reference, and a meridian line joining the far and near vision reference points. For example, the refraction area may comprise a progressive additional lens design adapted to the prescription of the person or adapted to slow down the progression of the abnormal refraction of the eye of the person wearing the lens element.

The meridian line corresponds to the locus of the intersection of the main gaze direction with the surface of the lens.

Preferably, according to such embodiment, the optical elements are configured so that in standard wearing conditions along any horizontal section of the lens, when worn by a wearer, the mean sphere and/or the mean cylinder of the microlenses increases from the intersection of said horizontal section with the meridian line towards the peripheral part of the lens.

The mean sphere and/or the mean cylinder increase function along the sections may be different depending on the position of said section along the meridian line.

In particular, the mean sphere and/or the mean cylinder increase function along the sections are unsymmetrical. For example, the mean sphere and/or the mean cylinder increase function are unsymmetrical along vertical and/or horizontal section in standard wearing conditions.

At least one of the microlens, has an optical function of not focusing an image on the retina of the eye of the person when the lens element is worn in standard wearing conditions.

Advantageously, such optical function of the microlens combined with a refractive area having at least one refractive power different from the refractive power of the prescription allows slowing down the progression of the abnormal refraction of the eye of the person wearing the lens element.

The microlenses may be non-contiguous.

In the sense of the present disclosure two microlenses are non-contiguous if for all the paths linking the two microlenses one may measure at least along part of each path the refractive power based on a prescription for the eye of the person.

When the two microlenses are on a spherical surface, the two microlenses are non-contiguous if for all the paths linking the two optical elements one may measure at least along part of each path the curvature of said spherical surface.

According to an embodiment, at least one of the microlenses has an optical function of focusing an image on a position other than the retina.

Preferably, at least 50%, for example at least 80%, for example all, of the microlenses have an optical function of focusing an image on a position other than the retina.

According to an embodiment, at least one of the microlenses has a non-spherical optical function.

Preferably at least 50%, for example at least 80%, for example all, of the microlenses have a non-spherical optical function.

In the sense of the present disclosure, a "non-spherical optical function" is to be understood as not having a single focus point.

The at least one microlens having a non-spherical optical function is transparent.

One can add these microlenses on a defined array like circle, square or hexagonal or random or other.

The microlenses may cover specific zones of the lens element, like at the center or any other area.

The optical element density or the quantity of power may be adjusted depending on zones of the base lens substrate. Typically, the microlenses may be positioned in the periphery of the base lens substrate, in order to increase the effect of the optical element on myopia control, so as to compensate peripheral defocus due to the peripheral shape of the retina for example.

According to an embodiment, at least one, for example all, of the microlenses has a shape configured so as to create a caustic in front of the retina of the eye of the person. In other words, such microlens is configured so that every section plane where the light flux going through said microlens is concentrated if any, is located in front of the retina of the eye of the person, either in a punctual way in a plane or never in a punctual manner in none of those section plane.

According to an embodiment, the at least one, for example all, of the microlenses having a non-spherical optical function is a multifocal refractive micro-lens.

In the sense of the present disclosure, a microlens being a "multifocal refractive micro-lens" includes bifocals (with two focal powers), trifocals (with three focal powers), progressive addition lenses, with continuously varying focal power, for example aspherical progressive surface lenses.

According to an embodiment, the at least one multifocal refractive micro-lens has a toric surface. A toric surface is a surface of revolution that can be created by rotating a circle or arc about an axis of revolution (eventually positioned at infinity) that does not pass through its center of curvature.

Toric surface lenses have two different radial profiles at right angles to each other, therefore producing two different focal powers.

Toric and spheric surface components of toric lenses produce an astigmatic light beam, as opposed to a single point focus.

According to an embodiment, the at least one of the microlenses having a non-spherical optical function, for example all, of the optical elements is a toric refractive micro-lens. For example, a toric refractive micro-lens with a sphere power value greater than or equal to 0 diopter ($\delta$) and smaller than or equal to +5 diopters ($\delta$), and cylinder power value greater than or equal to 0.25 Diopter ($\delta$).

As a specific embodiment, the toric refractive microlens may be a pure cylinder, meaning that minimum meridian line power is zero, while maximum meridian line power is strictly positive, for instance less than 5 Diopters.

According to an embodiment, at least one, for example all of the microlenses, has an optical function with high order optical aberrations. For example, the microlens is composed of continuous surfaces defined by Zernike polynomials.

Each microlens can have a maximum height, e.g., measured in a direction perpendicular to the surface from which it protrudes, that is less than or equal to 1 millimeter (mm), for instance less than or equal to 0.1 mm such as, for example, less than or equal to or between any two of 100 micrometers ($\mu$m), 90 $\mu$m, 80 $\mu$m, 70 $\mu$m, 60 $\mu$m, 50 $\mu$m, 40 $\mu$m, 30 $\mu$m, 20 $\mu$m, 10 $\mu$m, 5 $\mu$m, 1 $\mu$m, or smaller. In embodiments, each microlens has a maximum height preferably comprised between 1$\mu$m and 20 $\mu$m, for instance equal to 11$\mu$m or 15 $\mu$m. Each microlens can have a diameter, respectively, that is less than or equal to 10 mm, such as, for example, less than or equal to or between any two of 2.0 mm, 1.5 mm, 1.0 mm, 0.5 mm, 0.1 mm, 80 $\mu$m, 60 $\mu$m, 40 $\mu$m, 20 $\mu$m, or smaller. For example, the diameter may be between 2.0mm and 0.5 mm.

The base lens substrate therefore exhibits a thickness in average greater at the microlens than away from them, and the maximum thickness of the substrate is reached at the point of maximum thickness of the microlenses.

The method of manufacturing the optical article also comprises a step 300 of forming at least one second layer 30 extending over the second optical surface 10b of the base-lens substrate 10 and encapsulating the at least one optical element 20. By "encapsulating" it is meant that the whole surface of each optical element 20 is covered by, and is in contact with the material forming the second layer 30, without any gap or any intermediate material in between. The second layer 30 thus comprises a first surface in contact with the optical elements and, in the areas of the base-lens substrate devoid of optical elements, with the second optical surface of the base-lens substrate and a second surface opposite the first.

In embodiments, the second layer may be formed of organic eyeglass, for example made of thermoplastic or thermosetting plastic, with the same examples as provided above regarding a base-lens included in the base-lens substrate.

The material forming the second layer 30 has a refraction index $n_2$ that differs from the refraction index $n_1$ of the material forming the optical element 20. More specifically, the material forming the second layer 30 may have a refraction index $n_2$ lower than the refraction index $n_1$ of the material forming the optical element 20.

When the base-lens substrate is a semi-finished lens, the manufacturing method may comprise a step of surfacing the base-lens substrate, said surfacing being performed on the surface of the base-lens substrate that has not been covered by the second material, to obtain a finished lens.

Various embodiments of the manufacturing method will now be disclosed.

As indicated above, each optical element 20 is formed by inkjet printing.

An issue with inkjet printing lies in the resolutions of current additive manufacturing devices, said resolutions being typically of about $40\mu$m in the X-Y plane, i.e. in the plane of deposition of material, and about 1 $\mu$m, for instance about 10-15$\mu$m, in the Z direction, i.e. in a direction orthogonal to the plane of deposition. There resolutions do not enable to directly realize optical functions such as microlenses having typical diameter of about 1mm but with a resulting surface height of 1$\mu$m, diffractive elements which height is of the order of the wavelength or diffusive elements, which height is of the order of the wavelength or less.

By encapsulating the optical elements, i.e. covering the optical elements with the second layer of material, and properly choosing the materials forming the optical elements and forming said second layer, based on their refraction indexes, it is possible to circumvent this issue.

Indeed, when the material forming the second layer has a refraction index different but close to the refraction index of the material forming the optical element, the size of the optical element can be increased.

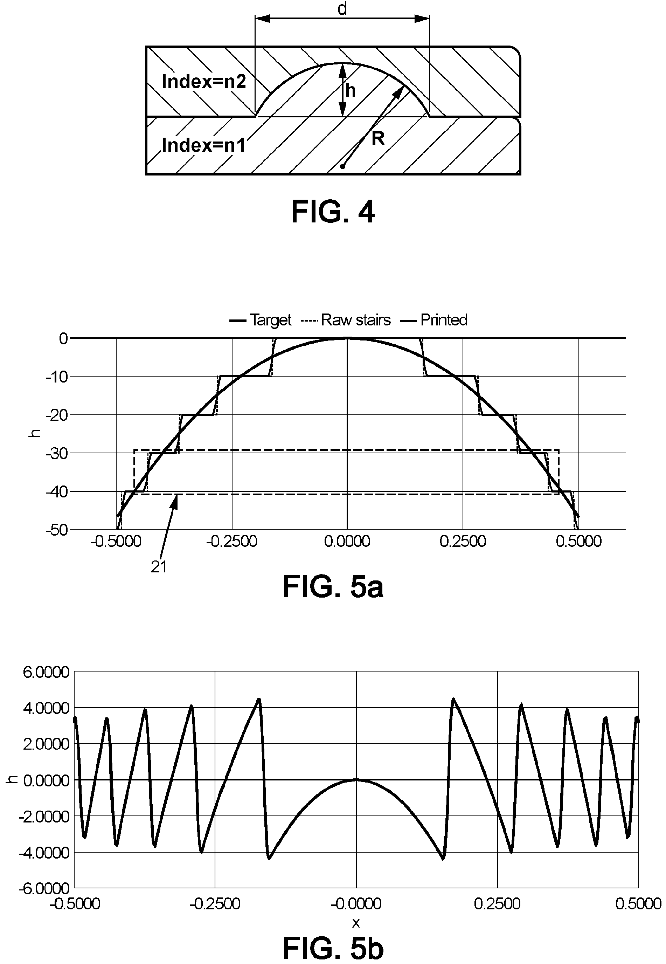

For instance, with reference to figure 4, is schematically shown an exemplary microlens in contact with a second material forming the second layer encapsulating the optical elements. Let n1 be the refractive index of the material forming the optical element and n2 be the refractive index of the material forming the second layer. Let also D be the diameter of the microlens, S its power, R its radius of curvature of the surface of the optical element and h its height.

In order to achieve the desired optical power S, the radius of curvature of the surface is given by:

$$R = (n_1 - n_2)/S$$

And the resulting height of the microlens can be calculated as:

$$h = R - \sqrt{R^2 - \left(\frac{D}{2}\right)^2} \approx \frac{D^2}{8R}$$

Classical parameters of a microlens that is formed on a surface of a lens at the interface with air can be a diameter of about 1 mm, a power of about 3.5 to 4.5 D and a refractive index of a unique material forming the base-lens substrate and the microlens of 1.56 (with the refractive index of air equal to 1), which gives R = 12 to 16 cm and a height h of the microlens between 0.78 and

1$\mu$m. As indicated above, this cannot be achieved by inkjet printing because of the insufficient Z-resolution.

However, by choosing a refracting index of the second material that is closer to the refraction index of the material forming the microlens, the height of the microlens can be increased, thereby enabling its formation by depositing successive layers of materials. For n1= 1.56, n2=1.5, we find R=1.3 to 1.7 cm and h=7.2 to 9.4$\mu$m.

Thus, by choosing the materials forming the optical element and the second layer, it is possible to increase the size of the optical elements, which enables forming this optical element by printing superposed layers of material.

Thus, according to a first embodiment, the formation of the optical elements is formed by depositing successive layers of material forming the optical element according to a profile configured to approximate a curved target surface of the optical element. The profile may in particular be a stepped profile, where the steps are considered in a direction orthogonal to the plane of deposition, hereinafter noted direction Z.

In embodiments, the formation of an optical element by inkjet printing comprises depositing, on the second optical surface 10b of the base lens substrate 10, a plurality of superposed layers of materials 21. In the case of a stepped profile, a lateral dimension of each deposited layer of material progressively decreases with reference to the previously deposited layer.

The thickness of one layer of material may be determined by the resolution according to the Z axis of the additive manufacturing device used for deposition, and may superior or equal to said resolution. In preferred embodiments, the thickness of one layer is equal to the resolution along Z of the device, which corresponds to forming as many layers of materials as it is technically possible and hence approximate at best the target surface of the optical element.

This embodiment may be performed in particular when the difference of refractive indexes between the material forming the microlens and the material forming the second layer is below a determined threshold, for instance below 0.1, preferably below 0.06, below 0.05 or even below 0.01.

Given a desired optical function to be achieved by the target curved surface of the optical element, such as for instance:

- An optical power for a microlens,
- A transmission in phase and amplitude for a diffractive element,
- A bidirectional scattering distribution function (BSDF) for a diffusive element,

It is possible to determine a maximum acceptable error on said optical function, the error resulting from the difference between the target curved profile that would achieve the desired optical function, and the printed profile that approximates the target curved profile.

Said error is a function of the difference of refractive index between the material forming the optical element and the second material, and of the geometrical difference between the target profile and the printed profile.

Regarding optical power, a criterion can be defined on deviation of optical path between the printed profile and the curved profile. The criterion may be a maximum value of optical path deviation which may be inferior or equal to $\lambda/4$ where A can be chosen between 400 and 800 nm, for instance 555 nm which corresponds to the eye peak sensitivity. Alternatively, the criterion may be the Marechal criterion for assessing quality of an optical system, and which sets as a maximum error $\lambda/12$

For a diffusive element, the maximum acceptable error may be defined as a maximum rugosity value according to the Z axis enabling matching the optical function of the printed element with the corresponding target curved profile.

For a diffractive element, the maximum acceptable error may be defined as a maximum relative error on the wavefront.

The dimensions of a stepped profile approximating the target curved profile are constrained by the resolution along Z axis of the printing device, and hence it is possible to determine from the stepped profile and the refractive index of the chosen materials, whether the error is below the maximum acceptable error. It is to be noted that in embodiments, the printed profile may be closer to the target profile than a stepped profile, at least because a printed profile is smoothed as compared to a stepped profile and also because some techniques of inkjet printing enable printing a smoother profile than a step profile (see below regarding implementation of step 200). In that case, the error between the printed profile and the target profile is less than the error between a stepped profile and the target profile, and hence if the error obtained for a stepped profile is acceptable, it will also be acceptable for the printed profile.

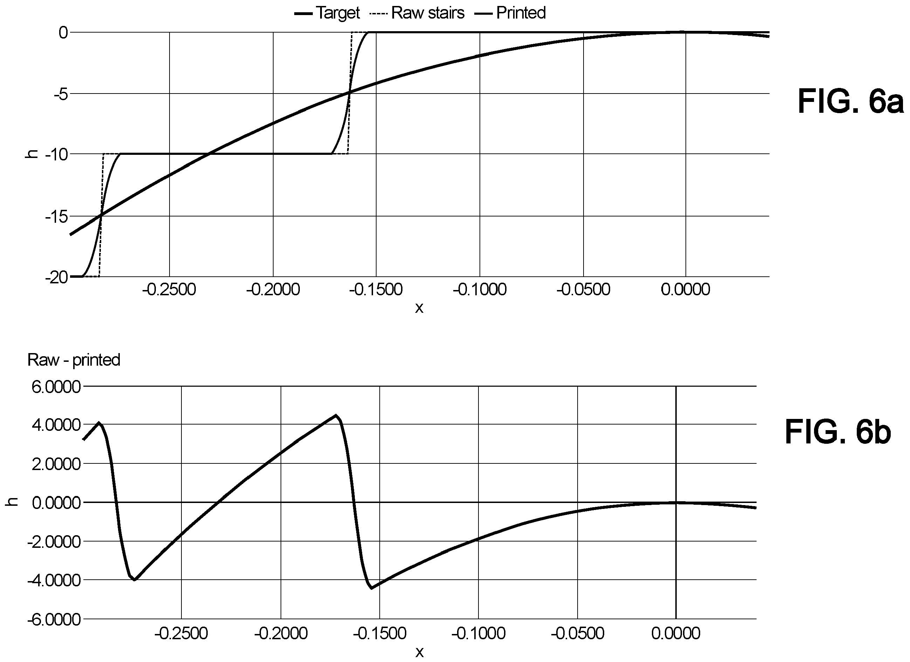

With reference to figure 5a, is shown an exemplary curved target profile of a microlens having a desired optical power, a stepped profile approximating the target profile, and the actually printed profile which is slightly smooth with respect to the stepped profile due to the printing process. A detailed view of these profiles is shown in figure 6a. The axis of abscissae represents mm in the plane of the deposition surface and the axis of ordinates represent the physical thickness of a layer expressed in $\mu$m.

As can be seen on these figures, approximating the curved surface of a microlens by a stepped profile induces an error on the optical function achieved by the optical element. The error of optical function corresponding to the profiles of fig 5a is shown in figure 5, and the error corresponding to the detailed view of fig 6a is shown in figure 6b. The axes of abscissae and ordinates are the same in figures 6a and 6b than in figures 5a and 5b.

Let ot be the optical thickness of a layer, defined by $ot = e(n1-n2)$ where e is the physical thickness of the layer. If a curved surface is approximated by a stepped profile with each layer having a thickness equal to e, then at each layer the error of optical path varies between a minimum and a maximum, as shown in figures 5a and 5b (in this example the error is alternatively negative and positive), and the maximum error in optical path between the stepped profile and the target curved profile is equal to the maximum peak to valley difference, which is inferior or equal to e, i.e. to the resolution along z of the printing device. The corresponding optical path is inferior to $e(n_1-n_2)$.

In the example shown in figures 4 a to 5b, where e is equal to $10\mu$m, corresponding to the optical resolution of the printing device, and n1-n2 is equal to 0.005 (n1 = 1.56 and n2=1.555) then the maximum error in optical path is $0.050\mu$m, and the measured error in optical path of the printed profile, which is smoothed and hence with a reduced error with reference to a stepped profile, is $0.045\mu$m.

Considering a mean wavelength A of 550 nm, the error of $0.045\ \mu$m corresponds to $\lambda/12$, which corresponds to the Marechal criterion determining the quality of an optical system. A lower criterion may also be applied to define the maximum acceptable thickness error, for instance a threshold of $\lambda/4$.

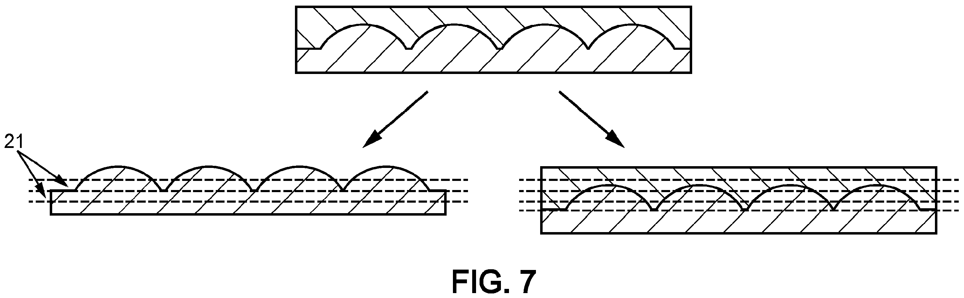

With reference to figure 7, the successive deposition of layers of material forming the optical elements, along with the formation of the base-lens substrate and/or the second layer, may be implemented in diverse manners.

According to a first example displayed in the left-hand part of figure 7, a base-lens substrate may be formed at step 100, step 200 may comprise depositing, on the second optical surface of the base-lens substrate, successive layers of material forming the optical elements, with a lateral dimension of each layer decreasing with respect to the previous layer. Each layer may be at least partially cured, for instance by light, e.g. UV irradiation, prior to depositing the next layer. The formation 300 of the second layer may then be performed by overmolding or by inkjet printing of the second material between and over the optical elements.

According to another example, step 200 of forming the optical elements by inkjet printing may be performed according to the teaching of document WO20220/169689, where each layer is printed at least partially on top of a previously printed layer, in such a way that the previously printed layer is enclosed by the second printed layer, to enable the printing material to flow over the surface of the previous layer of smaller surface area and surround the latter. Each layer may also be cured prior to deposition of a next layer. This enables printing a convex shape that better approximates the target curved surface than a stepped profile and thus it reduces the error on the optical function achieved by the optical element.

According to another example displayed in the right-hand part of figure 7, a base-lens substrate may be formed at step 100, and step 200 may comprise depositing, on the second optical surface of the base-lens substrate, successive layers of material, where each layer of material comprises first material on first regions for forming the optical elements, and second material on second regions surrounding the first regions for forming the second layer surrounding the optical elements. Each step of depositing a layer of material may comprise a substep of depositing first material, curing the first material, depositing second material and then curing the second material. Alternatively, a curing delay may be applied, in which case the curing is not performed after each printed layer. Thus according to this example steps 200 and 300 are performed simultaneously because the optical elements and the second layer of material are formed simultaneously, as schematically shown in figure 2b.

Once the portion of the optical device comprising both the optical elements and the part of the second layer surrounding the optical elements is printed, the remainder of the second layer can be formed by inkjet printing, molding, etc.

Couples of materials having a low difference in refraction indexes, and in particular a difference lower than a given threshold, may be selected for the above-disclosed first embodiment in which the optical elements are formed by depositing successive layers of material by inkjet printing. The threshold depends on the criterion on acceptable error.

For instance, a wavefront error below $\lambda/12$ criterion permits a high optical quality of microlenses. With a thickness of $10\mu$m per layer and a mean wavelength of 500 nm, the difference of index must be below $550.10^{-9}/(12.10^{-6})=0.045$. With such couple of refractive index, the radius of curvature will be $0.0045/3.5 = 1.3$ mm (where 3.5 corresponds to the exemplary optical power of the microlens) and the height of the structure is 101 $\mu$m, achieved in 10 layers.

If a lower optical quality such as $\lambda/4$ is accepted, the difference on index should be below 0.0135 according to the above parameters. In this case, the height of the structure is $32.6\mu$m achieved in three layers. We would suppose the spreading of the drops will smooth the edges of each layer and will not accentuate this defect.

According to a second embodiment, in which the optical elements are spherical microlenses, each microlens is formed by depositing, on the second optical surface of the base-lens substrate, a single droplet of material, or a plurality of coalescing droplets of material which, after setting, exhibits the size and shape of the desired microlens. By "coalescing droplets", is meant that a plurality of droplets are successively deposited, in contact with one another, so that the contacting droplets merge together to adopt the shape of a single, bigger droplet.

This second embodiment may be applied especially, but not exclusively, when the materials forming the microlenses and the second layer have indexes of refraction which difference exceeds the threshold provided above.

A desired shape of the microlens may be obtained by performing preliminary on the deposition surface a surface preparation enabling obtaining a desired contact angle between the deposited droplet and the surface. Indeed, for a plane, homogeneous surface, the following relationship is known between the contact angle between the droplet and the surface, and surface tensions of the interfaces between the droplet, the surface and the surrounding air or fluid forming the deposition environment:

$$cos\theta = \frac{\sigma_{SF}-\sigma_{SL}}{\sigma_{LF}}$$

Where $\theta$ is the contact angle between the droplet and the deposition surface, $\sigma_{SF}$ is the surface tension of the surface/air interface, $\sigma_{SL}$ is the surface tension of the surface/liquid interface (the liquid corresponding to the deposited material) and $\sigma_{LF}$ being the surface tension of the liquid/air interface.

A spherical shape is obtained for a contact angle of 90° which corresponds to $\sigma_{SF} = \sigma_{LF}$. The preliminary treatment of the surface may thus be achieved to bring $\sigma_{SF}$ equal to $\sigma_{LF}$, which is determined when the deposition material is selected.

For instance, a preliminary treatment may comprise plasma or corona treatment.

In the case where a microlens is formed by a single droplet of material, the distance between two droplets is computed in order to prevent two neighboring drops from coalescing and hence forming a single bigger drop.

The step 200 of forming the microlens by inkjet printing also comprises a step of curing the deposited droplets, by exposition to light, e.g. to UV light.

In the case where the microlens are formed by depositing a plurality of coalescing droplets, several contacting droplets may either be deposited by one same nozzle of the printing device, or by a plurality of neighboring nozzles. According to one example, a plurality of droplets may be successively deposited by a same nozzle at a constant location. Accordingly, the droplets are superposed to one another at the same location, and a bigger droplet is formed. According to another example, a plurality of droplets are successively deposited by a same nozzle, with the nozzle being displaced between the deposition of two droplets, or adjacent nozzles may simultaneously deposit contacting droplets. The contacting droplets merge together and the resulting droplet is centered on a location between the locations of the initially contacting droplets. In any case, the following parameters may be adapted to ensure that two adjacent droplets are in contact and will coalesce:

- volume of a droplet,
- distance between the droplets deposition location,
- shape of the deposited droplets.

Here again a preliminary surface treatment may be performed to control the shape of the deposited droplets, i.e. to achieve a determined shape.

In the cases where the optical elements are formed by deposition of successive layers of materials and where they are formed by deposition of a single or a plurality of coalescing droplets, it is also possible to use the same material for forming the optical element and the second layer, and to induce a difference in refractive index between the optical elements and the second layer by introducing nanoparticles of inorganic material. Addition of nanoparticles increases the refractive index of the material. Accordingly, in order to obtain a material forming the optical element 20 having a refractive index greater than the material forming the second layer 30, nanoparticles may be added to the material forming the optical element. Depending on the type and concentration of nanoparticles, the obtained variation of the refractive index may be comprised between 0.0001 and 0.01. The introduced nanoparticles may have a size between 12 and 20 nm to avoid the creation of a scattering effect.

Adding nanoparticles to obtain a refractive index difference between the optical element and the second layer enables using initially the same material, in particular the same inkjet printing resin, to manufacture both the optical element and the second layer. This has the advantage of simplifying the process by since only one set of inkjet parameters (viscosity, curing temperature etc.) is used, and also of reducing the costs.

In embodiments, when the optical elements are printed, the method may further comprise a step 400 of checking a difference between the printed profile and the target profile, to determine whether the difference remains below the determined maximum acceptable error. This step may be performed by measuring the printed profile using a profilometer, for instance a contact profilometer. If the error exceeds the maximum acceptable error, the optical device 1 may be rejected or may be subject to compensation to reduce the error. Compensation is performed by correcting the instructions sent to the inkjet printer, defining the specifications of the printed droplets, in order to adjust the profile of the printed material and thereby reduce the error.

## Claims

1. A method of manufacturing an optical article comprising:

    - providing (100) a base lens substrate (10) having first and second opposite optical surfaces (10a, 10b),
    - forming (200) at least one optical element (20) protruding from the second surface of the base lens substrate, and
    - forming (300) at least one second layer (30) extending over the second surface of the base lens substrate and encapsulating the at least one optical element,

wherein the optical element (20) and the second layer (30) are formed in materials having different refraction indexes, and the forming of the optical element is performed by inkjet printing.

2. The method according to claim 1, wherein forming the optical element (20) by inkjet printing comprises depositing at least one droplet of material for forming the optical element.

3. The method according to claim 2, wherein depositing at least one droplet of material comprises depositing a single droplet of material, said single droplet forming the optical element.

4. The method according to claim 2, wherein depositing at least one droplet of material comprises depositing a plurality of coalescing droplets, to form the optical element.

5. A method according to any of claims 2-4, further comprising a preliminary step of performing, on the second optical surface, a surface preparation configured to set a desired curved surface for each deposited droplet of material.

6. A method according to claim 1, wherein forming the optical element by inkjet printing comprises depositing successive layers of material forming the optical element on the second optical surface (10b) of the base lens substrate.

7. A method according to claim 6, comprising depositing the successive layers of material forming the optical element according to a stepped profile.

8. A method according to claim 6, wherein depositing the successive layers of material forming the optical element comprise depositing a layer of material forming the optical element on top of a previously deposited layer, in such a way that the previously deposited layer is enclosed by the next deposited layer.

9. The method according to any of the claims 1 to 8, wherein forming the optical element by inkjet printing comprises depositing successive layers of material on the second optical surface of the base lens substrate, wherein each layer of material comprises a first material on first regions for forming the optical elements, and a second material on second regions surrounding the first regions for forming the second layer surrounding the optical elements.

10. A method according to any of claims 6-9, wherein the optical element has a target curved profile configured to achieve a determined optical function, the inkjet printing is performed using a printing device having a determined resolution according to an axis which is, during printing, perpendicular to the deposition surface, and the materials forming the optical element and the second layer are selected such that the difference between the target curved profile and the printed profile formed by the successive layers of material causes an error on the optical function lower than a predetermined threshold.

11. The method according to claim 10, wherein the optical element is a microlens having a target curved profile configured to achieve a determined optical power, and the materials forming the optical element and the second layer are selected such that the difference between the target curved profile and the printed profile causes a deviation of optical path of a determined wavelength lower than a predetermined threshold.

12. The method according to claim 11, wherein the predetermined threshold is lower or equal to $\lambda/4$ where A is the determined wavelength.

13. The method according to any of claims 10 to 12, wherein the materials forming the optical element and the second layer are selected such that $z(n1-n2)$ is lower than the predetermined threshold, where z is the resolution of the inkjet printing device according to the axis which, in operation, is perpendicular to the second surface, n1 is the refraction index of the material forming the optical element and n2 is the refraction index of the material forming the second layer.

14. The method according to any of claims 10-13, wherein printing the at least one optical element comprises transmitting, to the printing device, a digital file comprising instructions defining printing parameters, and the method further comprises, when the error on the optical function between the printed profile and the target profile exceeds the predetermined threshold, updating the digital file by correcting the printing parameters of the digital file, and sending the updated file to the printing device.

15. The method according to any of the preceding claims, wherein the material for forming the optical element (20) is the material for forming the second layer (30) to which are added nanoparticles.

16. An optical article, **characterized in that** it is obtained by implementing the method according to any of the preceding claims.

FIG. 1a

FIG. 1b

FIG. 2a

FIG. 2b

FIG. 3

FIG. 4

FIG. 5a

FIG. 5b

FIG. 6a

FIG. 6b

**FIG. 7**

EP 4 344 863 A1

| | Europäisches Patentamt<br>European Patent Office<br>Office européen des brevets | **EUROPEAN SEARCH REPORT** | **Application Number**<br>EP 22 30 6456 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | WO 2021/214197 A1 (ESSILOR INT [FR])<br>28 October 2021 (2021-10-28)<br>* abstract *<br>* figures 2b-6 *<br>* paragraphs [0020], [0138], [0144], [0147] * | 1-4,16<br><br>5,15<br>6-14 | INV.<br>B29D11/00<br>B29C64/112 |
| Y<br><br>A | US 2021/356763 A1 (LE SAUX GILLES [FR] ET AL) 18 November 2021 (2021-11-18)<br>* abstract *<br>* figure 5 *<br>* paragraph [0171] * | 5<br><br>1-4,6-16 | |
| X<br><br><br>Y<br>A | US 2015/153589 A1 (MESCHENMOSER RALF [DE] ET AL) 4 June 2015 (2015-06-04)<br><br>* abstract *<br>* figures 1-27 *<br>* paragraphs [0031] – [0032], [0068] – [0070], [0143] – [0148], [0174], [0175] * | 1-4,6,7,<br>10,11,<br>14,16<br>8<br>5,9,12,<br>13 | |
| Y | US 2015/086754 A1 (VAN DE VRIE RICHARD [NL] ET AL) 26 March 2015 (2015-03-26)<br>* abstract *<br>* figures 1A-1H * | 8 | TECHNICAL FIELDS SEARCHED (IPC)<br><br>B29C<br>B29D<br>G02C |
| Y<br><br>A | US 2008/254210 A1 (LAI SHUI T [US] ET AL)<br>16 October 2008 (2008-10-16)<br>* abstract *<br>* figures 1A-5 *<br>* paragraphs [0035] – [0037], [0059] * | 15<br><br>1-14,16 | |
| A | US 2011/116152 A1 (GUIGAN FRANCK [FR] ET AL) 19 May 2011 (2011-05-19)<br>* abstract *<br>* figures 1-4 * | 1-16 | |

-/--

The present search report has been drawn up for all claims

| Place of search | Date of completion of the search | Examiner |
|---|---|---|
| The Hague | 29 March 2023 | Heckmann, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

**EP 22 30 6456**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2006 343449 A (SEIKO EPSON CORP) 21 December 2006 (2006-12-21) * abstract * * figures 1-7 * | 1-16 | |
| A | JP 2006 150751 A (SHARP KK) 15 June 2006 (2006-06-15) * abstract * * figures 1-4 * | 1-16 | |

TECHNICAL FIELDS
SEARCHED    (IPC)

The present search report has been drawn up for all claims

| Place of search | Date of completion of the search | Examiner |
|---|---|---|
| **The Hague** | **29 March 2023** | **Heckmann, Paul** |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt | Application Number |
|---|---|---|
| | European Patent Office | EP 22 30 6456 |
| | Office européen des brevets | |

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
## SHEET B

The Search Division considers that the present European patent application does not comply with the requirements of unity of invention and relates to several inventions or groups of inventions, namely:

```
1. claims: 1-5(completely); 16(partially)

   A method of manufacturing an optical article comprising a
   preliminary step of performing, on the second optical
   surface, a surface preparation configured to set a desired
   curved surface for each deposited droplet of material.
   (claim 5)
                            ---


2. claims: 6-14(completely); 16(partially)

   A method of manufacturing an optical article wherein forming
   the optical element by inkjet printing comprises depositing
   successive layers of material forming the optical element on
   the second optical surface of the base lens substrate.
   (claim 6)
                            ---


3. claims: 15(completely); 16(partially)

   A method of manufacturing an optical article wherein the
   material for forming the optical element is the material for
   forming the second layer to which are added nanoparticles.
   (claim 15)
                            ---
```

## ANNEX TO THE EUROPEAN SEARCH REPORT
## ON EUROPEAN PATENT APPLICATION NO.

EP 22 30 6456

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2023

| Patent document cited in search report | | Publication date | Patent family member(s) | | Publication date |
|---|---|---|---|---|---|
| WO 2021214197 | A1 | 28-10-2021 | AU 2021258459 A1 | | 27-10-2022 |
| | | | BR 112022019482 A2 | | 16-11-2022 |
| | | | CA 3176576 A1 | | 28-10-2021 |
| | | | CN 115398278 A | | 25-11-2022 |
| | | | EP 3816677 A1 | | 05-05-2021 |
| | | | KR 20230002352 A | | 05-01-2023 |
| | | | WO 2021214197 A1 | | 28-10-2021 |
| US 2021356763 | A1 | 18-11-2021 | BR 112021005132 A2 | | 15-06-2021 |
| | | | CN 112888973 A | | 01-06-2021 |
| | | | EP 3867672 A1 | | 25-08-2021 |
| | | | US 2021356763 A1 | | 18-11-2021 |
| | | | WO 2020078964 A1 | | 23-04-2020 |
| US 2015153589 | A1 | 04-06-2015 | BR 102014029894 A2 | | 15-09-2015 |
| | | | CN 104730727 A | | 24-06-2015 |
| | | | EP 2878989 A1 | | 03-06-2015 |
| | | | ES 2837798 T3 | | 01-07-2021 |
| | | | US 2015153589 A1 | | 04-06-2015 |
| US 2015086754 | A1 | 26-03-2015 | EP 2846984 A1 | | 18-03-2015 |
| | | | US 2015086754 A1 | | 26-03-2015 |
| | | | WO 2013167685 A1 | | 14-11-2013 |
| US 2008254210 | A1 | 16-10-2008 | US 2005046957 A1 | | 03-03-2005 |
| | | | US 2008254210 A1 | | 16-10-2008 |
| | | | WO 2006029268 A2 | | 16-03-2006 |
| US 2011116152 | A1 | 19-05-2011 | EP 2291691 A2 | | 09-03-2011 |
| | | | EP 3185051 A2 | | 28-06-2017 |
| | | | EP 3663811 A1 | | 10-06-2020 |
| | | | US 2011116152 A1 | | 19-05-2011 |
| | | | WO 2009147353 A2 | | 10-12-2009 |
| JP 2006343449 | A | 21-12-2006 | NONE | | |
| JP 2006150751 | A | 15-06-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4689387 A
- US 4775733 A
- US 5059673 A
- US 5087758 A
- US 5191055 A
- WO 20220169689 A